# EUROPÄISCHE PATENTSCHRIFT

(11) **EP 3 580 091 B1**
(45) Veröffentlichungstag und Bekanntmachung des Hinweises auf die Patenterteilung: **05.04.2023**
(21) Anmeldenummer: 18710298.3
(22) Anmeldetag: 07.02.2018
(51) Int. Cl.: B60N 2/80, B60N 2/75, B60N 2/70

(54) **KOPFSTÜTZE**
HEAD RESTRAINT
APPUIE-TÊTE

(30) Priorität: 09.02.2017 DE 102017001218; 13.12.2017 DE 102017129831; 13.12.2017 DE 102017129830; 13.12.2017 DE 102017129857
(43) Veröffentlichungstag der Anmeldung: 18.12.2019
(73) Patentinhaber: GRAMMER AG, 92289 Ursensollen (DE)
(72) Erfinder: BÖSL, Manuel, 92272 Freudenberg (DE)
(74) Vertreter: Roche, von Westernhagen & Ehresmann
(86) Internationale Anmeldenummer: PCT/DE2018/000023
(87) Internationale Veröffentlichungsnummer: WO 2018/145685

(56) Entgegenhaltungen:
- DE-A1-102012 107 823
- DE-A1-102013 103 382
- DE-A1-102014 212 230
- GB-A- 2 315 408
- US-A- 2 931 427

## Beschreibung

Die Erfindung betrifft eine Flächenstruktur insbesondere für ein Fahrzeugausstattungsteil, wie Kopfstütze oder Armlehne.

Eine aus offenkundiger Vorbenutzung bekannte Kopfstütze umfasst ein Kopfanlageteil, welches als Widerlager für den Kopf des Sitzinsassen dient. Das Kopfanlageteil ist mittels einer Lagervorrichtung an dem Fahrzeugsitz, insbesondere an der Rückenlehne des Fahrzeugsitzes, gehalten. Das Kopfanlageteil umfasst bei der Kopfstütze aus dem Stand ein aus Kunststoff hergestelltes Basisteil welches mit einem Schaumpolster und einem Bezug, z.B. aus einem textilen Material oder aus Leder, versehen ist. Aufgrund des Schaumpolsters und ggf. zusätzlicher weicher Zwischenlagen zwischen dem Bezug und dem Schaumpolster, wird der Aufschlag des Kopfes des Sitzinsassen, z.B. bei einem Unfall, gedämpft. Auch bei einer bloßen Anlage ist die Anlage für den Insassen komfortabel, weil sie weich und nachgiebig ist.

GB 2 315 408 A betrifft eine Kopfstütze mit einer hinteren Stützplatte und einer nicht elastisch verformbaren Frontplatte. Die Frontplatte weist eine Vielzahl von Elementen auf, die derart ausgebildet sind, dass sie sich in nicht-elastischer Weise verformen. Insbesondere haben die Elemente die Form von beabstandeten Fingern. Die Frontplatte der GB 2 315 408 A weist nicht die Eigenschaft einer elastischen Verformbarkeit auf im Sinne einer Anpassung und Nachgiebigkeit trotz Verwendung eines steifen Kunststoffmaterials.

DE 10 2014 212 230 A1 betrifft einen Sitz mit integrierter Zierleistenanordnung und Kopfstütze. Die Konstruktion der Fahrzeugsitzanordnung ist leicht und dünn, aber dennoch starr, um einen Fahrgast im regulären Gebrauch und im Falle eines Aufpralls zu stützen. Das leichte Material ergibt eine flexible elastische Schicht zur Erhöhung des Gesamtkomforts.

Die Fahrzeugsitzanordnung mit einer Rückenlehne mit Polymer-Körperabschnitt umfasst eine flexible Komfortstütze, die über einer Vorderseite des Polymer-Körperabschnitts angeordnet ist und eine Vielzahl von Öffnungen aufweist, die eine Stützmatrix, ausgelegt zum Tragen des Gewichts eines Fahrgastes,, definieren.

Die Komfortstütze besteht aus einem flexiblen Polymer und weist eine Vielzahl von Öffnungen auf, welche die Stützmatrix definieren und in verschiedenen Reihen von vertikalen und horizontalen Ringen mit einer allgemeinen linearen Konfiguration angeordnet sind. Durch die Konstruktion der flexiblen Komfortstütze können sich die Ringe ausdehnen und zusammenziehen.

DE 10 2012 107 823 A1 betrifft einen Kindersitz, der verbesserte elastische und polsternde Eigenschaften aufweist. Die obere Oberfläche weist eine Vielzahl von Perforationen auf, die mit dem inneren Hohlraum in Verbindung stehen können. Diese Bauform kann die Elastizität und die polsternden Eigenschaften der oberen Oberfläche steigern und die Luftzirkulation und Atmungsaktivität durch die obere Oberfläche begünstigen und so ihren Gebrauchskomfort erhöhen.

Es war Aufgabe der US 2,931,427 A eine ventilierte Sitzbespannung aus geformten Plastik zu schaffen, wobei das Plastik eine vorgegebene Form besitzt und ausreichende Festigkeit aufweist, um die Stabilität zu gewährleisten, zugleich aber auch eine gewisse Elastizität aufweist.

Die Ventilieröffnungen belüften die Sitzfläche und die Rückenfläche und sorgen zugleich für eine Flexibilität. Außerdem ist ein elastischer Bereich zwischen dem Sitzbereich und dem Lehnenbereich vorgesehen.

DE 10 2013 103 382 A1 betrifft eine Armlehnenvorrichtung, die auf einer Grundplatte eines Rahmens einer Armlehne montiert ist. Die Armlehnenvorrichtung umfasst eine Polstereinheit, die aus einem Silikon gebildet ist und sich elastisch aufgrund einer Krafteinwirkung verformt, wie z.B. aufgrund des Auflegens eines Arms. Zur Einstellung einer elastischen Verformbarkeit weist die Polstereinheit eine Komfortstruktur auf, die als Struktur angrenzender Taschen ausgebildet ist. Durch die Komfortstruktur wird eine elastische Verformbarkeit der Polstereinheit erhöht, da das Material der Polstereinheit bei Belastung in die durch die Komfortstruktur gebildeten Hohlräume ausweichen kann. Durch Änderung der Größe und Form der Komfortstruktur kann die elastische Verformbarkeit einfach eingestellt werden. Die Komfortstruktur ist als ebene Polygonnetzstruktur ausgebildet und bildet wabenförmige Taschen aus, aus welchen die gesamte Komfortstruktur zusammengesetzt ist.

Es war Aufgabe der Erfindung, eine Flächenstruktur zu schaffen, die ohne großen Fertigungsaufwand herstellbar ist und flexibel gestaltbar ist, die aber dennoch eine relativ große Elastizität aufweist. Ferner soll die Flächenstruktur unter Reinigungsaspekten vorteilhaft sein.

Die Aufgabe wurde gelöst durch eine Flächenstruktur mit den Merkmalen des Anspruchs 1.

Die Flächenstruktur bildet eine Anlagefläche eines Fahrzeugausstattungsteils. Anlagefläche bedeutet im Sinne der Erfindung, dass die Fläche Kräfte aufnehmen kann. Es kann sich z.B. dabei auch um eine Auflagefläche handeln. Z.B. kann die Flächenstruktur als Fläche einer Fahrzeug-Kopfstütze oder -Armlehne oder eines Fahrzeugsitzes verwendet werden. Die Flächenstruktur ist elastisch verformbar ausgebildet, d.h. bei der Anlage oder Auflage eines Körperteils verformt sich die Flächenstruktur elastisch. Nach der Entlastung stellt sich die Flächenstruktur aufgrund der elastischen Rückstellkraft automatisch in die Ausgangslage zurück.

Die Flächenstruktur umfasst wenigstens einen Flächenkörper, der mit mindestens einem elastisch verformbaren Verbindungselement mit wenigstens einem anderen Flächenkörper und / oder mit dem Fahrzeugausstattungsteil, insbesondere mit einem Rahmen des Fahrzeugausstattungsteils, verbunden ist. Der Flächenkörper ist z.B. im Wesentlichen steif ausgebildet. Der Flächenkörper und das Verbindungselement sind z.B. aus demselben Material hergestellt. Gemäß einer Alternative sind der Flächenkörper und das Verbindungselement aus unterschiedlichen Materialien hergestellt. Der Flächenkörper bildet einen Teil der Anlagefläche aus. Sind mehr als ein Flächenkörper vorhanden, wird die Anlagefläche von mehreren Flächenkörpern, insbesondere von allen Flächenkörpern, ausgebildet.

Weist die Flächenstruktur mehrere Flächenkörper auf, können alle Flächenkörper gleich gestaltet sein. Gemäß einer Alternative kann die Flächenstruktur zwei oder mehr unterschiedliche Arten von Flächenkörpern aufweisen. Von jeder Art kann die Flächenstruktur ein oder mehrere Flächenkörper enthalten.

Mittels des elastisch verformbaren Verbindungselements kann sich ein erster Flächenkörper relativ zu wenigstens einem zweiten Flächenkörper oder relativ zu dem Ausstattungsteil bewegen. Bei der Anlage eines Köperteils erfolgt daher aufgrund der Elastizität eine gedämpfte Abbremsung. Mit anderen Worten die Anlage erscheint dem Benutzer daher nicht hart, wie bei einer starren Fläche, sondern aufgrund der Nachgiebigkeit weich. Dennoch ist es möglich, die Flächenstruktur einteilig mit einem Kunststoffteil, wie z.B. Kopfanlageteil oder Armauflagekörper, auszubilden.

Auf diese Weise ist es, selbst wenn ein steifes Material für den Flächenkörper und / oder für das Verbindungselement verwendet wird, aufgrund der Kumulation der elastischen Verformungen der Verbindungselemente möglich einen großen Federweg zu erreichen. Die Steifigkeit der Flächenstruktur ist z.B. von dem Material, von der Länge und von der Anzahl der Verbindungselemente abhängig, die in einem Flächenbereich der Flächenstruktur vorgesehen sind.

Der Flächenkörper ist z.B. plattenförmig ausgebildet. D.h., die Maße einer Außenfläche sind in Bezug auf seine Dicke gering. Die Platte kann z.B. eine Kreis-, Dreieck-, Viereck- oder Vieleckform aufweisen.

Eine Ausführungsform ist dadurch gekennzeichnet, dass das elastisch verformbare Verbindungselement von einem Steg gebildet ist. Der Steg weist z.B. eine Länge auf, die im Verhältnis zu einem Durchmesser des Steges groß ist. Das Verbindungselement ist elastisch verformbar. D.h. es kann z.B. aus einer Ausgangslage verbogen oder tordiert werden und bildet sich anschließend aufgrund seiner elastischen Rückstellkraft wieder in seine Ausgangsform zurück.

Gemäß einer Ausführungsform ist die Länge des Steges im Verhältnis zu seinem Durchmesser groß. Auf diese Weise kann eine große Relativbewegung zwischen zwei Flächenkörpern oder zwischen einem Flächenkörper und dem Ausstattungsteil erreicht werden.

Das Verbindungselement ist mit einer ersten Verbindung an einem ersten Flächenkörper und mit einer zweiten Verbindung an einem zweiten Flächenkörper oder an dem Fahrzeugausstattungsteil gehalten. In einer Ruheposition, befindet sich das Verbindungselement in einer entspannten Lage. In einer zweiten, elastisch verformten Position ist das Verbindungselement elastisch verformt. Grundsätzlich können sich sowohl der Mittelteil, als auch die Endbereiche des Verbindungselements verformen. Insbesondere wird bei der Verformung wenigstens ein Endbereich des Verbindungselements verformt, z.B. durch eine Torsion. Der erste Flächenkörper kann sich auf diese Weise relativ zu dem zweiten Flächenkörper bewegen, so dass er in der verformten Lage versetzt zu dem zweiten Flächenkörper angeordnet ist.

Die erfindungsgemäße Flächenstruktur ist dadurch gekennzeichnet, dass sich die erste Außenfläche in eine Richtung erstreckt und sich die zweite Außenfläche ebenfalls in die Richtung erstreckt und der ersten Außenfläche gegenüberliegend angeordnet ist, wobei der zweite Verbindungsbereich in die Richtung seitlich versetzt ist zu einem Schnittpunkt von einer Geraden und der zweiten Außenfläche, wobei die Gerade die kürzeste Verbindung zwischen der ersten Außenfläche und der zweiten Außenfläche bildet, wobei die Gerade durch den ersten Verbindungsbereich verläuft. Aufgrund dieser Merkmale ermöglicht das Verbindungselement bei der Verformung einen Versatz benachbarter Flächenkörper.

Das Verbindungselement ist z.B. Z-förmig ausgebildet. und weist einen Mittelteil, sowie zwei Endabschnitte auf. Die Verformung des Verbindungselements findet z.B. in dem Übergangsbereich zwischen dem Mittelteil und den Endabschnitten statt.

Die Flächenstruktur bildet z.B. ein Modul, welches in einem Montagesitz des Fahrzeugausstattungsteils angeordnet werden kann. Die Flächenstruktur ist z.B. an einem Rahmen befestigt. Das Modul kann z.B. mit Halte- und Verriegelungsmitteln versehen sein, die mit korrespondierenden Gegenmitteln des Ausstattungsteils in Eingriff gebracht werden können.

Die Flächenstruktur ist z.B. Teil einer Kopfstütze, einer Armlehne oder eines Fahrzeugsitzes. Hier kann die Flächenstruktur eine Anlagefläche teilweise oder vollständig ausbilden.

Die Erfindung betrifft gemäß einem zweiten Aspekt eine Kopfstütze.

Eine solche Kopfstütze ist aus offenkundiger Vorbenutzung bekannt. Es wird Bezug genommen auf den zu dem ersten Erfindungsaspekt erwähnten Stand der Technik.

Es war Aufgabe der Erfindung eine Kopfstütze mit einer Kopfanlagefläche zu schaffen, die bezügliche ihres Fertigungsaufwandes und bezüglich der Fertigungskosten verbessert ist. Außerdem war es Aufgabe der Erfindung eine Kopfstütze zu schaffen, die in Bezug auf die Reinigungsmöglichkeit und ihrer Eigenschaft hinsichtlich einer Verschmutzung vorteilhaft ist.

Die Aufgabe wurde gelöst durch eine Kopfstütze mit den Merkmalen des Anspruchs 8.

Die Kopfstütze weist wenigstens eine Tragstange auf, mittels welcher sie an einem Fahrzeugsitz gelagert ist. Die Kopfstütze umfasst ferner ein Kopfanlageteil mit einer Kopfanlagefläche, wobei die Kopfanlagefläche wenigstens teilweise von einer Flächenstruktur gemäß dem ersten Erfindungsaspekt gebildet ist.

Gemäß einer Ausführungsform ist das Kopfanlageteil im Wesentlichen aus Kunststoff gebildet. Das Kopfanlageteil ist z.B. einteilig, insbesondere als Kunststoffspritzgießteil, ausgebildet. Das Kopfanlageteil kann z.B. im Einkomponenten- oder im Zweikomponenten-Spritzgießverfahren hergestellt sein. Die Flächenstruktur ist z.B. in das Kopfanlageteil integriert, d.h. angeformt. Alternativ kann die Flächenstruktur an dem Kopfanlageteil befestigt sein oder z.B. als Modul ausgebildet sein, welches dann in einem Montagesitz des Kopfanlageteils befestigt wird.

Eine Ausgestaltung der Erfindung ist dadurch gekennzeichnet, dass das Kopfanlageteil als Platte ausgebildet ist. Die Platte ist z.B. derart geformt, dass sie in einer Seitenansicht (im Querschnitt) eine I-Form, eine G-Form oder eine O-Form aufweist. Ein Bereich der Platte, insbesondere ein Endbereich, bildet z.B. die Kopfanlagefläche aus. Ein Bereich der Platte, insbesondere ein Endbereich, bildet z.B. einen Befestigungsbereich, zur Halterung des Kopfanlageteils an wenigstens einer Tragstange oder an einem Tragstangenbügel.

Das Kopfanlageteil ist z.B. unmittelbar an der Lagervorrichtung gehalten. Es weist z.B. wenigstens einen Montagesitz für einen Bereich, z.B. für einen Endbereich, wenigstens einer Tragstange oder für einen Bereich eines Tragstangenbügels auf.

Das Kopfanlageteil bildet z.B. eine Prallfläche für die Kopfanlagefläche. D.h. die Anlagefläche der Kopfstütze kann sich, z.B. durch elastische Verformung, soweit verlagern, bis es mit der Prallfläche in Kontakt gerät. Die elastische Verformung findet dabei durch eine Verformung der Flächenstruktur und / oder durch eine Verformung des gesamten die Kopfanlagefläche bildenden Kopfanlagebereichs der Kopfstütze statt. Z.B. kann die Kopfanlagefläche als Bereich einer Platte ausgebildet sein, welcher die Flächenstruktur aufweist, wobei sich die Platte und / oder die Flächenstruktur verformen können.

Für eine Steigerung des Komforts ist die Kopfanlagevorrichtung, insbesondere die Kopfanlagefläche, z.B. mit einer weichen Auflage versehen. Die weiche Auflage ist z.B. von einem Kissen gebildet. Das Kissen kann z.B. an dem Kopfanlageteil lösbar befestigt sein.

Weitere Vorteile der Erfindung ergeben sich anhand der Beschreibung von in den schematischen Fig. dargestellten Ausführungsbeispielen. Es zeigen:
Fig. 1a bis 1d Draufsichten auf unterschiedliche Ausführungsformen der Flächenstruktur gemäß dem ersten Erfindungsaspekt,
Fig. 1e eine perspektivische Ansicht der Flächenstruktur gemäß Fig. 1b unter Einwirkung einer Kraft,
Fig. 2 eine perspektivische Darstellung eines ersten Ausführungsbeispiels einer Kopfstütze gemäß dem zweiten Erfindungsaspekt, wobei die Kopfstütze eine Kopfanlagefläche mit einer federnden Flächenstruktur aufweist,
Fig. 3 eine Frontansicht der Kopfstütze gemäß Fig. 1,
Fig. 4 eine Seitenansicht gemäß Ansichtspfeil IV in Fig. 3,
Fig. 5 eine perspektivische Darstellung einer Kopfstütze gemäß der Fig. 2 bis 4, wobei die Kopfanlagefläche mit einem Kissen versehen ist,
Fig. 6 eine Seitenansicht der Kopfstütze gemäß Fig. 5,
Fig. 7 eine Ansicht gemäß Ansichtspfeil VII in Fig. 6,
Fig. 8 eine Frontansicht gemäß Ansichtspfeil VIII in Fig. 6,
Fig. 9 eine Schnittansicht gemäß Schnittlinie IX - IX in Fig. 8,
Fig. 10 ein Ausschnitt gemäß Ausschnittlinie X in Fig. 1b
Fig. 11 ein Ausschnitt gemäß Ausschnittlinie XI in Fig. 10,
Fig. 12a eine Ansicht gemäß Ansichtspfeil Xlla in Fig. 11, und
Fig. 12b in Anlehnung an Fig. 12a der Ausschnitt bei Belastung der Kopfanlagefläche.

Die Flächenstruktur insgesamt ist in den Zeichnungen mit dem Bezugszeichen 10 bezeichnet. Gleiche Bezugszeichen in den unterschiedlichen Fig. bezeichnen entsprechende Teile, auch wenn kleine Buchstaben hinzugefügt oder weggelassen sind.

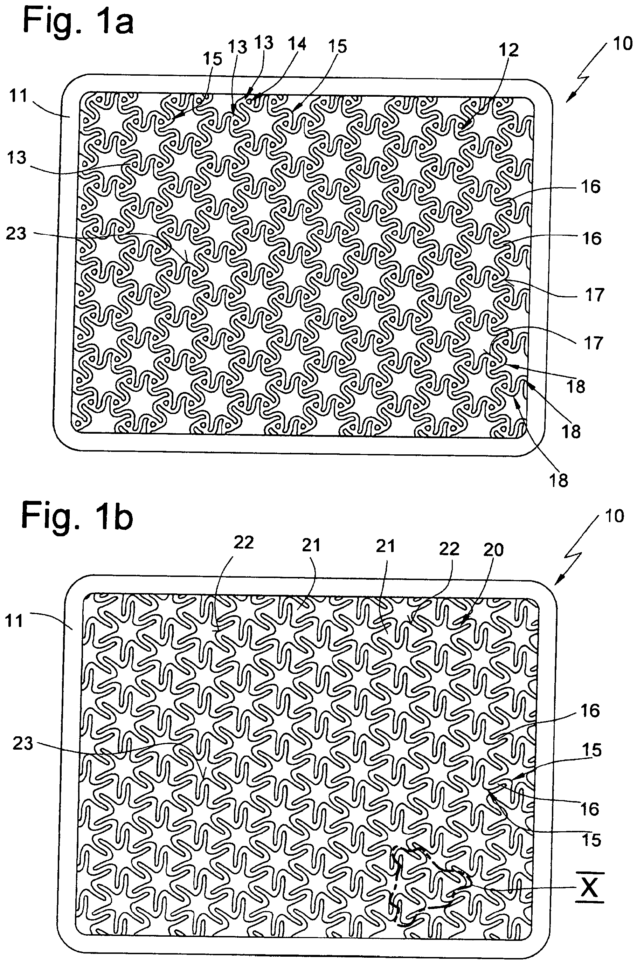

Die Flächenstruktur 10 kann in unterschiedlichen Ausführungsformen ausgebildet sein. Beispielhaft sind in den Fig. 1a bis 1d vier Ausführungsformen dargestellt, die nachfolgend als Anordnungen bezeichnet sind. In den Fig. 1a bis 1d sind unterschiedliche Anordnungen 12, 20, 25 und 30 dargestellt. Das Prinzip der elastischen Verformung ist bei allen Anordnungen gleich. Die Anordnungen 12, 20, 25 und 30 sind z.B. einteilig hergestellt.

In den Fig. 1a bis 1d ist die Flächenstruktur 10 an einem Rahmen 11 befestigt, der modulartig in Kopfstützen oder anderen Fahrzeugausstattungsteilen einsetzbar ist, bei denen eine federnde Flächenstruktur gewünscht ist. Grundsätzlich kann die Flächenstruktur 10 an einem Rahmen 11 befestigt sein oder auch ohne Verwendung eines Rahmens 11 bei Fahrzeugausstattungsteilen eingesetzt werden, z.B. indem die Anordnung unmittelbar an dem Ausstattungsteil befestigt ist oder angeformt ist.

Die Anordnung 12, die in Fig. 1a dargestellt ist, umfasst einen dreieckförmigen Flächenkörper 13. Der Flächenkörper 13 ist mit einer Aussparung 14 versehen. Der Flächenkörper 13 weist Außenflächen 17 sowie drei Verbindungsbereiche 15 auf, die im vorliegenden Ausführungsbeispiel an den Eckbereichen des dreieckförmigen Flächenkörpers 13 angeordnet sind. An jedem Verbindungsbereich 15 ist ein erster Endbereich 18 eines elastisch verformbaren Verbindungselements 16, welches in den Ausführungsbeispielen die Form eines Stegs hat, mit dem Flächenkörper 13 verbunden. Ein anderer Endbereich 18 des Verbindungselements 16 ist mit einem weiteren Flächenkörper 13 verbunden. Zwischen den Endbereichen 18 ist ein Mittelbereich 19 angeordnet. Das Verbindungselement 16 weist eine Mittelachse m auf.

Die Außenflächen 17 zweier benachbarter Flächenkörper 13 stehen etwa parallel zueinander. Die Mittelachse m verläuft im Mittelbereich 19 etwa parallel zu den zwei gegenüberliegenden Außenflächen 17.

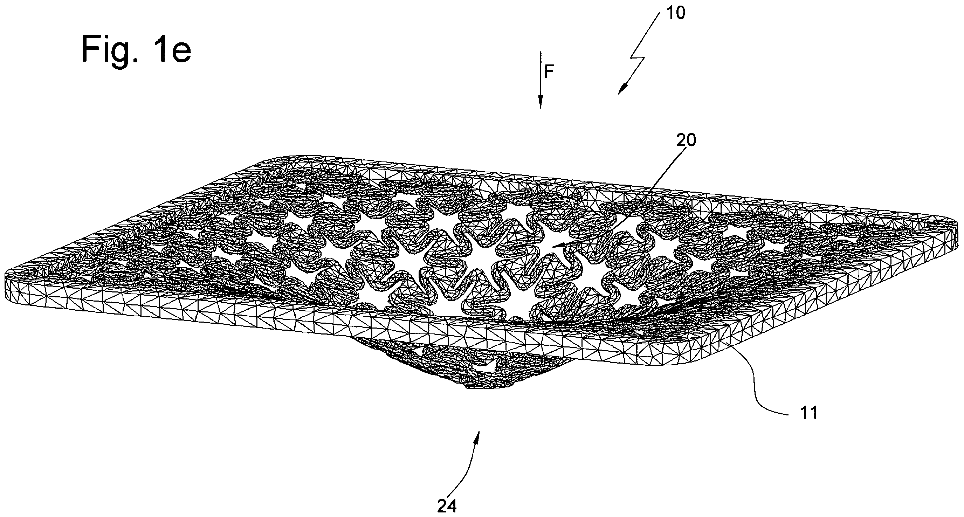

Bei einer Belastung mit einer Kraft F bewegt sich die Flächenstruktur in eine verformte Position, wobei sich die Relativposition der Flächenkörper 13 zueinander ändert. In Fig. 1e ist die Flächenstruktur 10 unter Einwirkung einer Kraft F dargestellt. Die Verformung beruht auf dem Prinzip, dass das Verbindungselement 16 aufgrund der Belastung, in den Endbereichen 18 tordiert wird, so dass der Mittelbereich 19 des Verbindungselements 16 schwenken kann und dabei einen Versatz zweier benachbarter Flächenkörper 13 ermöglicht. Der Mittelbereich 19 bleibt im Wesentlichen unverformt. Das Prinzip wird weiter unten noch genauer erläutert.

Auch bei Verwendung eines steifen Materials für den Flächenkörper 13 und für das Element 16 kann auf diese Weise aufgrund der Kumulation der elastischen Verformungen der Verbindungselemente 16 ein großer Federweg, d.h. eine große Verformung der Flächenstruktur 10 erreicht werden. Die Steifigkeit der Flächenstruktur 10 ist z.B. von dem Material, von der Länge der Verbindungselemente, insbesondere der Stege, und von deren Anzahl abhängig, die in einem Flächenbereich der Flächenstruktur enthalten sind.

Auf diese Weise wird von den Flächenkörpern 13 und den Verbindungselementen 16 eine elastisch verformbare Auflagefläche 23 gebildet.

In Fig. 1b ist eine Anordnung 20 dargestellt, die dreieckförmige Flächenkörper 21 aufweist. Der Flächenkörper 21 bildet drei Außenflächen 22 aus. Ferner umfasst jeder Flächenkörper 21 drei Verbindungsbereiche 15, die sich an Eckbereichen des Flächenkörpers 21 befinden. Mit jedem Flächenkörper 21 sind drei Verbindungselemente 16 verbunden, was nicht für die Flächenkörper 21 gilt, die am Rand der Flächenstruktur 10 angeordnet sind. Jedes Verbindungselement 16 ist mit einem Endbereich 18 mit einem Flächenkörper 21 und mit einem anderen Endbereich 18 mit einem benachbarten Flächenkörper 21 verbunden. In dem Mittelbereich 19 verläuft die Mittelachse m etwa parallel zu sich gegenüberliegenden Außenflächen 22 benachbarter Flächenkörper.

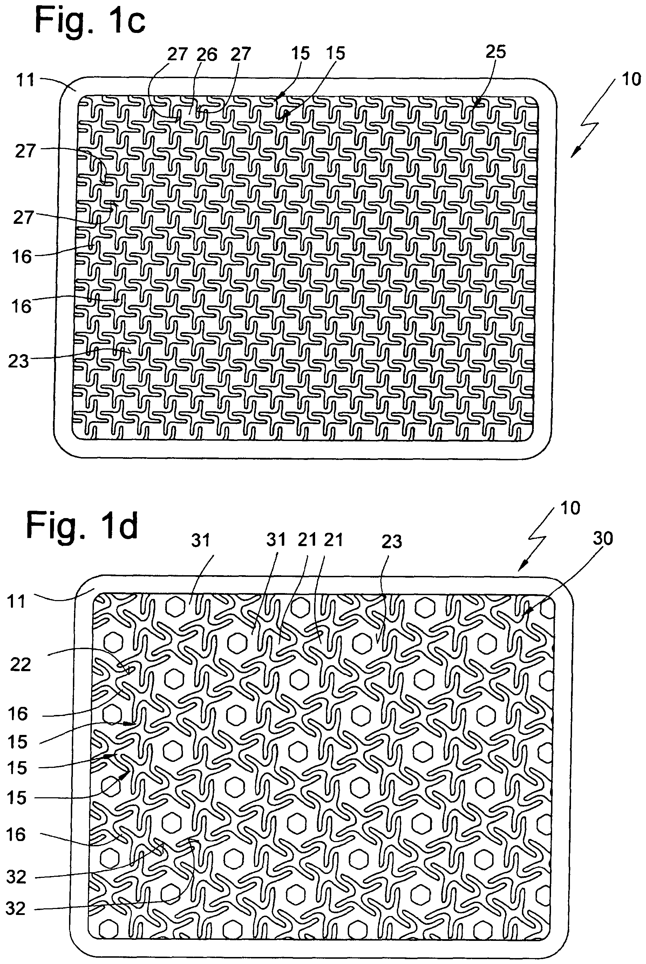

Fig. 1c zeigt eine Anordnung 25, umfassend quadratische Flächenkörper 26, die jeweils mit vier Außenflächen 27 ausgebildet sind. Jeder Flächenkörper 26 ist mit vier Verbindungselementen 16 verbunden. Jedes Verbindungselement 16 ist mit zwei Flächenkörpern verbunden. Die Verbindungsbereiche 15 sind an Eckbereichen des Flächenkörpers 26 angeordnet.

Die Anordnung 30 gemäß Fig. 1d umfasst Flächenkörper 31 und Flächenkörper 21. Die Flächenkörper 31 sind von Sechsecken gebildet, die mit einer Aussparung 33 versehen sind und sechs Außenflächen 32 aufweist. Mittels sechs Verbindungselementen 16 ist jeder Flächenkörper 31 mit sechs Flächenkörpern 21 verbunden.

In Fig. 1e ist die Anordnung 20 unter Einwirkung einer Kraft F dargestellt. Eine Wölbung 24 der Auflagefläche ist zu erkennen.

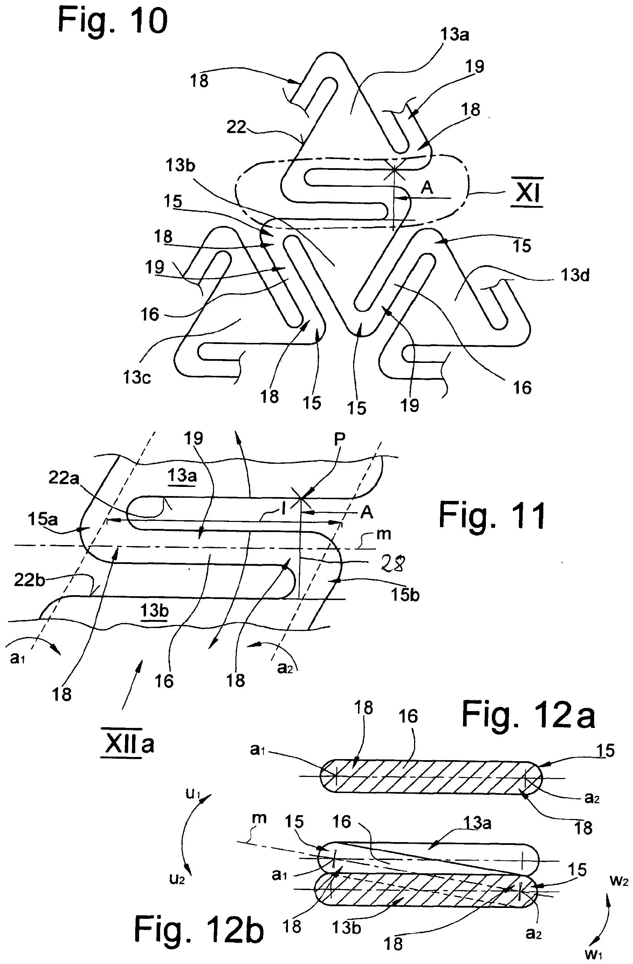

Anhand der Fig. 10, 11, 12a und 12b soll nachfolgend das Prinzip der Verformung dargestellt werden, dass bei allen Flächenstrukturen 10, also auch bei den Anordnungen 12, 20, 25 und 30, gleich ist. Fig. 10 zeigt einen Ausschnitt aus der Anordnung 1b. In Fig. 10 sind vier Flächenkörper 13 dargestellt, die nachfolgend mit den Bezugszeichen 13a, 13b, 13c und 13d bezeichnet sind. Jeder der Flächenkörper 13a, 13b, 13c und 13d ist mit drei Verbindungselementen 16 verbunden, wodurch eine elastische Verbindung der drei Flächenkörper 13a, 13b, 13c untereinander sowie mit weiteren benachbarten Flächenkörpern 13 hergestellt ist. In Fig. 10 sind der Mittelbereich 19 sowie die Endbereiche 18 der Verbindungselemente 16 zu erkennen.

Fig. 11 zeigt einen Ausschnitt aus Fig. 10, welcher einen Bereich der Flächenkörper 13a und 13b sowie einen die beiden Flächenkörper 13a und 13b verbindendes Verbindungselement 16 zeigt.

Es wird deutlich, dass das elastische Verbindungselement 16 in Form eines Steges mit einer ersten Außenfläche 22 eines ersten Flächenkörpers 13 einen ersten Verbindungsbereich 15 bildet, wobei sich die erste Außenfläche 22 in eine Richtung A erstreckt und mit einer zweiten Außenfläche 22 eines zweiten Flächenkörpers 13 einen zweiten Verbindungsbereich 15 bildet, die sich ebenfalls in die Richtung A erstreckt.

Die Außenflächen 22 der benachbarten Flächenkörper 13a und 13b sind gegenüberliegend angeordnet. Der zweite Verbindungsbereich 15a ist in Bezug auf einen Schnittpunkt P in Richtung A seitlich versetzt. In dem Schnittpunkt P schneidet eine Gerade 28, welche durch den Verbindungsbereich 15b verläuft und die kürzeste Verbindung zwischen den Außenflächen 22b und 22a der Flächenkörper 13b und 13a bildet, die Außenfläche 22a. Hierdurch ergibt sich eine Längserstreckung des elastischen Verbindungselements 16, die unter Belastung der Struktur 10 einen Versatz der benachbarten Flächenkörper 13a und 13b ermöglicht. Dieses Prinzip ist wirksam bei allen Flächenkörpern 13 und den verbundenen Verbindungselementen 16.

In Fig. 12a ist eine Ansicht gemäß Ansichtspfeil Xlla dargestellt, wobei die Flächenstruktur entspannt ist. Fig. 12b zeigt den Ausschnitt gemäß Fig. 12a unter Belastung des Flächenkörpers 13b mit einer Kraft F. Es ist zu erkennen, dass das Verbindungselement 16 relativ zu dem Flächenkörper 13a um eine Schwenkachse a1 in Richtung u1 und relativ zu dem Flächenkörper 13b um eine Schwenkachse a2 in Richtung w1 geschwenkt wird. Eine Kraft wird dabei von dem Flächenelement 13b mit einem Hebelarm der Länge I des Verbindungselements 16 auf die benachbarten Flächenkörper 13a, 13c und 13d übertragen. Darüber hinaus wirkt sich die Länge I auf den Versatz aus, der aufgrund der Belastung zwischen den zwei benachbarten Flächenkörpern 12a und 12b stattfindet. Im vorliegenden Ausführungsbeispiel entspricht die Länge I etwa der Länge einer Seitenfläche 22 des Flächenkörpers 13.

Bei einer Entlastung bewegt sich die Flächenstruktur 10 aufgrund der elastischen Rückstellkraft automatisch wieder in die Ausgangslage. D.h. in Bezug auf das Ausführungsbeispiel, dass das Flächenelement 13b sich relativ zu dem Flächenelement 13a wieder in die ursprüngliche Position gemäß Fig. 12a verformt, wobei das Verbindungselement 16 relativ zu dem Flächenkörper 13a um die Schwenkachse a1 in Richtung u2 und relativ zu dem Flächenkörper 13b um eine Schwenkachse a2 in Richtung w2 geschwenkt wird.

Die Ausgangsform der Flächenstruktur 10 muss nicht zwangsläufig eben sein. Sie kann beliebig geformt sein, d.h. die Flächenstruktur 10 kann z.B. eine konkave oder konvexe Form aufweisen.

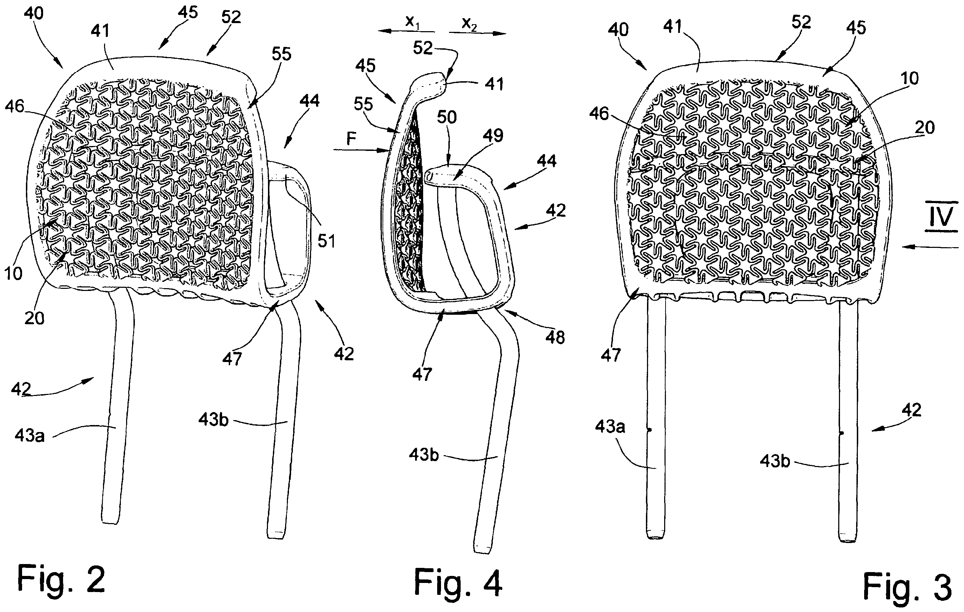

In den Fig. 2 bis 4 ist eine Kopfstütze dargestellt. Die Kopfstütze insgesamt ist in den Fig. mit dem Bezugszeichen 40 bezeichnet.

Die Kopfstütze 40 umfasst eine Kopfanlagevorrichtung 41 sowie eine Lagervorrichtung 42. Die Lagervorrichtung 42 umfasst Tragstangen 43a und 43b, die fest mit der Kopfanlagevorrichtung 41 verbunden sind. Die Tragstangen 43a und 43b weisen jeweils einen unteren Endbereich auf, welcher fest oder höhenverstellbar an einem nicht dargestellten Fahrzeugsitz gelagert werden kann. Alternativ zu den Tragstangen 43a und 43b könnte auch ein Tragstangenbügel verwendet werden. Gemäß einer weiteren Alternative könnte die Lagervorrichtung 42 einen Bereich aufweisen, der einteilig - z.B. aus Kunststoffspritzguss - mit der Kopfanlagevorrichtung 41 herstellbar ist und der an dem Fahrzeugsitz lagerbar ist.

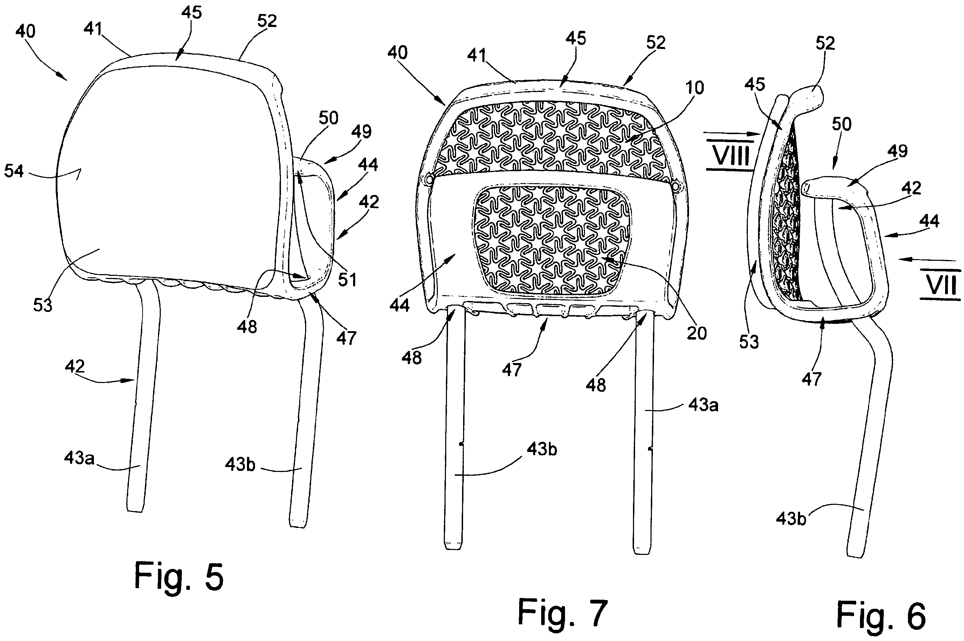

Die Kopfanlagevorrichtung 41 umfasst einen Lagerbereich 44 sowie einen Kopfanlagebereich 45 mit einer Kopfanlagefläche 46. In der Seitenansicht gemäß Fig. 7 hat die Kopfanlagevorrichtung 41 etwa eine G-Form. In einem unteren Bereich 47 weist das Kopfanlageteil 41 Öffnungen 48 auf, die von den Tragstangen 43a bzw. 43b durchgriffen werden. Die Öffnungen 48 bilden jeweils ein Lager zur Lagerung des Kopfanlageteils 41. Ein oberes Ende der Tragstangen 43a und 43b ist mit einer Befestigung 49 fest mit einem in Richtung des Kopfanlagebereichs 45 zurückverlaufenden Abschnitt 50 des Lagerbereichs 44 verbunden.

Der Abschnitt 50 umfasst eine Prallfläche 51, die einen Anschlag für den Kopfanlagebereich 45 bildet, wenn dieser sich bei einer Kraft F auf die Kopfanlagefläche 46 aufgrund der Verformung der Flächenstruktur 10 und / oder aufgrund eines Verschwenkens des Kopfanlagebereichs 45 in Richtung x2 bewegt.

Der Kopfanlagebereich 45 geht in den unteren Bereich 47 über. An einer Oberseite bildet der Kopfanlagebereich 45 ein freies Ende 52. Das Kopfanlageteil 41 ist flexibel ausgebildet. Der Kopfanlagebereich 45 ist relativ zu dem Lagerbereich 44 elastisch verformbar, wenn eine Kraft F auf die Kopfanlagefläche 46 wirkt.

Darüber hinaus umfasst der Kopfanlagebereich 45 einen Rahmen 55 sowie die von dem Rahmen 55 umschlossene Flächenstruktur 10 in Form der Anordnung 20. Die Flächenstruktur 10 ist einteilig mit der Kopfanlagevorrichtung 41 geformt ausgebildet. Der Kopfanlagebereich 45 kann sich unter der Einwirkung der auf die Kopfanlagefläche 46 wirkenden Kraft F aus einer in Fig. 7 dargestellten Grundform in Richtung x2 verformen und bei nachlassender Kraft F in Richtung x1 in die Ausgangsform zurückverformen. Dabei kann sich einerseits die elastische Flächenstruktur 10 relativ zu dem Rahmen 55 und andererseits der Kopfanlagebereich 45 relativ zu dem Lagerbereich 44 verformen.

Die Kopfstütze 10 ist z.B. derart ausgebildet, dass sich die Flächenstruktur 10 schon bei geringen Kräften z.B. bei einer Kopfanlage, verformen lässt. Auf diese Weise passt sich die Form der Flächenstruktur 10 z.B. an den Kopf des Insassen an. Die Verformung des Kopfanlagebereichs 45 relativ zu dem Lagerbereich 44 erfolgt z.B. erst bei größeren Kräften, wie sie z.B. bei einem Unfall auftreten, wenn der Kopf des Sitzinsassen mit hoher Geschwindigkeit auf den Kopfanlagebereich 45 auftrifft.

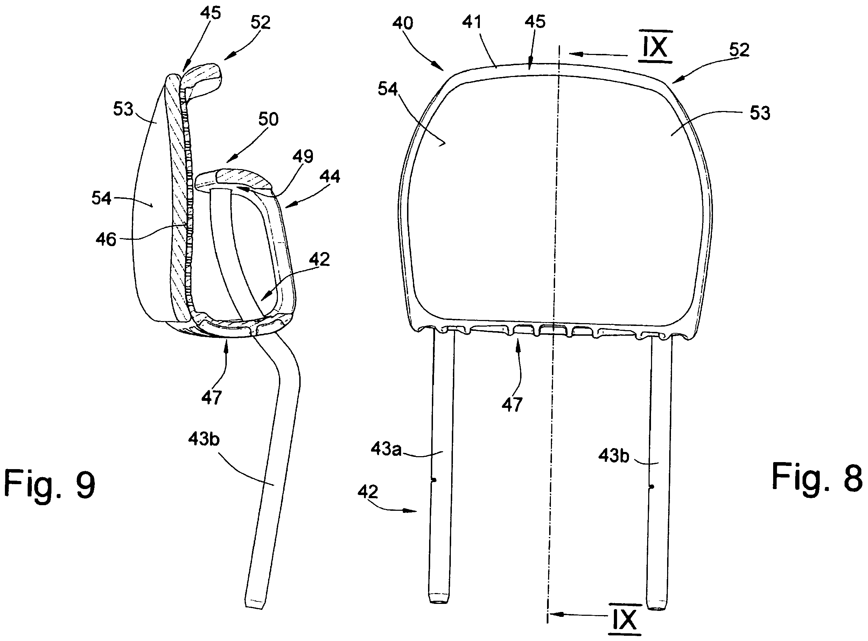

Die in den Fig. 5 bis 8 dargestellte Kopfstütze entspricht der in den Fig. 2 bis 4 dargestellten Kopfstütze 40, wobei die Kopfanlagefläche 46 mit einem Kissen 53 versehen ist, die eine Kissenanlagefläche 54 ausbildet. Durch Verwendung des Kissens 53 wird eine Steigerung des Komforts erreicht und die Anlagekraft wird gleichmäßiger auf die Flächenstruktur 10 verteilt.

Die elastische Flächenstruktur 10 kann nicht lediglich an Kopfstützen, sondern alternativ z.B. auch bei anderen Ausstattungsteilen des Fahrzeuginnenraums, wie z.B. bei Armlehnen oder Mittelkonsolen als Auf- oder Anlagefläche eingesetzt werden.

## Patentansprüche

1. Flächenstruktur (10) für eine Anlagefläche oder Auflagefläche (23) eines Fahrzeugausstattungsteils, insbesondere für eine Fahrzeug-Kopfstütze (40) oder -Armlehne, wobei die Flächenstruktur (10) elastisch verformbar ausgebildet ist, wobei die Flächenstruktur (10) wenigstens einen Flächenkörper (13, 13a, 13b) umfasst, wobei jeder Flächenkörper (13, 13a, 13b) mit mindestens einem elastisch verformbaren Verbindungselement (16) mit wenigstens einem anderen Flächenkörper (13, 13a, 13b) verbunden ist und / oder mit dem Fahrzeugausstattungsteil verbindbar ist, wobei das Verbindungselement (16) mit einer ersten Außenfläche (22, 22a, 22b) eines ersten Flächenkörpers (13, 13a, 13b) einen ersten Verbindungsbereich bildet und mit einer zweiten Außenfläche (22, 22a, 22b) eines zweiten Flächenkörpers (13, 13a, 13b) oder der Laibung eines Rahmens oder des Ausstattungsteils einen zweiten Verbindungsbereich (15, 15a, 15b) bildet, **dadurch gekennzeichnet, dass** sich die erste Außenfläche (22, 22a, 22b) in eine Richtung (A) erstreckt und sich die zweite Außenfläche (22, 22a, 22b) ebenfalls in die Richtung (A) erstreckt und der ersten Außenfläche (22, 22a, 22b) gegenüberliegend angeordnet ist, wobei der zweite Verbindungsbereich (15, 15a, 15b) in die Richtung (A) seitlich versetzt ist zu einem Schnittpunkt (P) von einer Geraden (28) und der zweiten Außenfläche (22, 22a, 22b), wobei die Gerade (28) die kürzeste Verbindung zwischen der ersten Außenfläche (22, 22a, 22b) und der zweiten Außenfläche (22, 22a, 22b) bildet, wobei die Gerade (28) durch den ersten Verbindungsbereich (15, 15a, 15b) verläuft,

2. Flächenstruktur nach Anspruch 1, **dadurch gekennzeichnet, dass** der Flächenkörper (13, 13a, 13b) plattenförmig ausgebildet ist.

3. Flächenstruktur nach Anspruch 1 oder Anspruch 2, **dadurch gekennzeichnet, dass** die Flächenstruktur (10) aus Kunststoff, aus Metall oder aus einem Verbundwerkstoff gebildet ist.

4. Flächenstruktur nach einem der vorangehenden Ansprüche, **dadurch gekennzeichnet, dass** das elastisch verformbare Verbindungselement (16) von einem Steg gebildet ist.

5. Flächenstruktur nach einem der vorangehenden Ansprüche, **dadurch gekennzeichnet, dass** in einer Ausgangsform der Flächenstruktur das Verbindungselement (16) in einer ersten Position relativ zu dem ersten Flächenkörper (13, 13a, 13b) angeordnet ist, und bei einer elastischen Verformung der Flächenstruktur (10) das Verbindungselement (16) in einer zweiten Position angeordnet ist.

6. Flächenstruktur nach einem der vorangehenden Ansprüche, **dadurch gekennzeichnet, dass** das Verbindungselement (16) zumindest einen Bereich aufweist, der elastisch tordierbar ist.

7. Flächenstruktur nach einem der vorangehenden Ansprüche, **dadurch gekennzeichnet, dass** die Flächenstruktur (10) ein Modul bildet, welches erste Befestigungsmittel aufweist, die mit zweiten Befestigungsmitteln eines Fahrzeugausstattungsteils lösbar in Eingriff gebracht werden können.

8. Kopfstütze (40) für einen Fahrzeugsitz, mit einer Kopfanlagevorrichtung (41) mit einer Kopfanlagefläche (46), welche mittels einer Lagervorrichtung (42) zur Lagerung an dem Fahrzeugsitz verbunden ist, **dadurch gekennzeichnet, dass** das Kopfanlageteil mit einer Flächenstruktur gemäß einem der Ansprüche 1 bis 7 versehen ist.

9. Kopfstütze nach Anspruch 8, **dadurch gekennzeichnet, dass** sich die Kopfanlagevorrichtung (41), insbesondere ein Kopfanlagebereich (45) der Kopfanlagevorrichtung (41) bei einer auf die Kopfanlagefläche (46) wirkenden Mindestkraft elastisch verformt.

10. Kopfstütze nach Anspruch 8 oder 9, **dadurch gekennzeichnet, dass** die Kopfanlagevorrichtung (41) einstückig, insbesondere als Kunststoffspritzgießteil ausgebildet ist.

11. Kopfstütze nach einem der Ansprüche 8 bis 10, **dadurch gekennzeichnet, dass** die Kopfanlagevorrichtung (41) unmittelbar an der Lagervorrichtung (42) gehalten ist.

12. Kopfstütze nach einem der Ansprüche 8 bis 11, **dadurch gekennzeichnet, dass** die Kopfanlagevorrichtung (41) eine Prallfläche (51) für die Kopfanlagefläche (46) bildet.

13. Kopfstütze nach einem der Ansprüche 8 bis 12, **dadurch gekennzeichnet, dass** die Kopfanlagevorrichtung (41), insbesondere der Kopfanlagebereich (45), mit einer weichen Auflage versehen ist.

14. Kopfstütze nach einem der Ansprüche 8 bis 13, **dadurch gekennzeichnet, dass** die Kopfanlagefläche (46) in horizontaler Richtung konkav oder konvex gekrümmt ist.

## Claims

1. Surface structure (10) for a support surface or bearing surface (23) of a vehicle accessory, particularly for a vehicle headrest (40) or armrest, wherein the surface structure (10) is elastically deformable, wherein the surface structure (10) comprises at least one surface body (13, 13a, 13b), wherein each surface body (13, 13a, 13b) is connected to at least one other surface body (13, 13a 13b) by at least one elastically deformable connecting element (16) and/or can be connected to the vehicle accessory, wherein the connecting element (16) forms a first connecting region with a first outer surface (22, 22a, 22b) of a first surface body (13, 13a, 13b) and forms a second connecting region (15, 15a, 15b) with a second outer surface (22, 22a, 22b) of a second surface body (13, 13a, 13b) or the soffit of a frame or of the accessory, **characterised in that** the first outer surface (22, 22a, 22b) extends in a direction (A) and the second outer surface (22, 22a, 22b) also extends in the direction (A), and is arranged opposite the first outer surface (22, 22a, 22b), wherein the second connecting region (15, 15a, 15b) is laterally offset in the direction (A) to a point of intersection (P) from a straight line (28) and the second outer surface (22, 22a, 22b), wherein the straight line (28) forms the shortest connection between the first outer surface (22, 22a, 22b) and the second outer surface (22, 22a, 22b), wherein the straight line (28) runs through the first connecting region (15, 15a, 15b).

2. Surface structure according to claim 1, **characterised in that** the surface body (13, 13a, 13b) is formed as a plate.

3. Surface structure according to claim 1 or claim 2, **characterised in that** the surface structure (10) is formed of plastic, of metal or of a composite material.

4. Surface structure according to one of the preceding claims, **characterised in that** the elastically deformable connecting element (16) is formed by a bar.

5. Surface structure according to one of the preceding claims, **characterised in that** the connecting element (16) is arranged in a first position relative to the first surface body (13, 13a, 13b) in an initial form of the surface structure and the connecting element (16) is arranged in a second position in the case of an elastic deformation of the surface structure (10).

6. Surface structure according to one of the preceding claims, **characterised in that** the connecting element (16) has at least one region that can be twisted elastically.

7. Surface structure according to one of the preceding claims, **characterised in that** the surface structure (10) forms a module that has a first fixing means which can be brought into releasable engagement with second fixing means of a vehicle accessory.

8. Headrest (40) for a vehicle seat, having a head support device (41) having a head support surface (46) that is connected to the vehicle seat by means of a mounting device (42) for mounting, **characterised in that** the head support part is provided with a surface structure according to one of claims 1 to 7.

9. Headrest according to claim 8, **characterised in that** the head support device (41), particularly a head support region (45) of the head support device (41) is elastically deformed in the event of a minimum force acting on the head support surface (46).

10. Headrest according to claim 8 or 9, **characterised in that** the head support device (41) is formed as one part, particularly as a plastic injection moulded part.

11. Headrest according to one of claims 8 to 10, **characterised in that** the head support device (41) is held directly on the mounting device (42).

12. Headrest according to one of claims 8 to 11, **characterised in that** the head support device (41) forms an impact surface (51) for the head support surface (46).

13. Headrest according to one of claims 8 to 12, **characterised in that** the head support device (41), particularly the head support region (45), is provided with a soft cushion.

14. Headrest according to one of claims 8 to 13, **characterised in that** the head support surface (46) is concavely or convexly curved in the horizontal direction.

## Revendications

1. Structure de surface (10) pour une surface d'appui ou une surface de support (23) d'une partie d'équipement de véhicule, en particulier pour un appui-tête (40) ou un accoudoir de véhicule, la structure de surface (10) étant conçue de façon élastiquement déformable, dans laquelle la structure de surface (10) comprend au moins un corps de surface (13, 13a, 13b), dans laquelle chaque corps de surface (13, 13a, 13b) est relié par l'intermédiaire d'au moins un élément de liaison élastiquement déformable (16) à au moins un autre corps de surface (13, 13a, 13b) et/ou peut être relié à la partie d'équipement du véhicule, et dans laquelle l'élément de liaison (16) forme une première région de connexion avec une première surface extérieure (22, 22a, 22b) d'un premier corps de surface (13, 13a, 13b) et forme une seconde région de connexion (15, 15a, 15b) avec une seconde surface extérieure (22, 22a, 22b) d'un second corps de surface (13, 13a, 13b) ou de l'intrados d'un cadre ou de la partie d'équipement, **caractérisé en ce que** la première surface extérieure (22, 22a, 22b) s'étend dans une direction (A) et la seconde surface extérieure (22, 22a, 22b) s'étend également dans la direction (A) et est située en face de la première surface extérieure (22, 22a, 22b), la seconde région de connexion (15, 15a, 15b) étant décalée latéralement dans la direction (A) par rapport à un point d'intersection (P) d'une ligne droite (28) et de la seconde surface extérieure (22, 22a, 22b), la ligne droite (28) établissant la liaison la plus courte entre la première surface extérieure (22, 22a, 22b) et la seconde surface extérieure (22, 22a, 22b), dans laquelle la ligne droite (28) passe à travers la première région de connexion (15, 15a, 15b).

2. Structure de surface selon la revendication 1, **caractérisée en ce que** la structure de surface (13, 13a, 13b) est réalisée sous la forme d'une plaque.

3. Structure de surface selon la revendication 1 ou la revendication 2, **caractérisée en ce que** la structure de surface (10) est constituée d'une matière plastique, d'un métal ou d'un matériau composite.

4. Structure de surface selon l'une quelconque des revendications précédentes, **caractérisée en ce que** l'élément de liaison élastiquement déformable (16) est constitué par une entretoise.

5. Structure de surface selon l'une quelconque des revendications précédentes, **caractérisée en ce que**, dans une forme initiale de la structure de surface, l'élément de liaison (16) est placé dans une première position par rapport au second corps de surface (13, 13a, 13b) et, à l'occasion d'une déformation élastique de la structure de surface (10), l'élément de liaison (16) est placé dans une seconde position.

6. Structure de surface selon l'une quelconque des revendications précédentes, **caractérisée en ce que** l'élément de liaison (16) comprend au moins une région qui peut être tordue élastiquement.

7. Structure de surface selon l'une quelconque des revendications précédentes, **caractérisée en ce que** la structure de surface (10) forme un module comprenant des premiers moyens de fixation qui sont aptes à être engagés de façon amovible avec des seconds moyens de fixation d'une partie d'équipement du véhicule.

8. Appui-tête (40) pour siège de véhicule, comprenant un dispositif d'appui-tête (41) qui présente une surface d'appui-tête (46) reliée au siège de véhicule par l'intermédiaire d'un dispositif de support (42) destiné à être monté sur le siège, **caractérisé en ce que** la partie d'appui-tête est pourvue d'une structure de surface selon l'une quelconque des revendications 1 à 7.

9. Appui-tête selon la revendication 8, **caractérisé en ce que** le dispositif d'appui-tête (41), en particulier une région d'appui-tête (45) du dispositif d'appui-tête (41), se déforme élastiquement sous l'effet d'une force minimale qui est exercée sur la surface d'appui-tête (46).

10. Appui-tête selon la revendication 8 ou 9, **caractérisé en ce que** le dispositif d'appui-tête (41) est réalisé d'une seule pièce, en particulier sous la forme d'une pièce de matière plastique moulée par injectioń.

11. Appui-tête selon l'une quelconque des revendications 8 à 10, **caractérisé en ce que** le dispositif d'appui-tête (41) est maintenu directement sur le dispositif de support (42).

12. Appui-tête selon l'une quelconque des revendications 8 à 11, **caractérisé en ce que** le dispositif d'appui-tête (41) forme une surface d'impact (51) pour la surface d'appui-tête (46).

13. Appui-tête selon l'une quelconque des revendications 8 à 12, **caractérisé en ce que** le dispositif d'appui-tête (41), en particulier la région d'appui-tête (45), est pourvu d'un support souple.

14. Appui-tête selon l'une quelconque des revendications 8 à 13, **caractérisé en ce que** la surface d'appui-tête (46) est incurvée de façon concave ou de façon convexe dans le sens horizontal.
